# EUROPÄISCHE PATENTANMELDUNG

(11) **EP 3 575 134 A1**
(43) Veröffentlichungstag der Anmeldung: **04.12.2019**
(21) Anmeldenummer: 18174795.7
(22) Anmeldetag: 29.05.2018
(51) Int. Cl.: B60L 9/18, B60L 13/00, H02J 1/02, H02J 1/06

(54) **SCHIENENFAHRZEUG MIT DEZENTRALEM ANTRIEBSSYSTEM**

(71) Anmelder: Siemens Aktiengesellschaft, 80333 München (DE)
(72) Erfinder: Bakran, Mark-Matthias, 91052 Erlangen (DE); Böhmer, Jürgen, 90547 Stein (DE); Helsper, Martin, 90584 Allersberg (DE); Krafft, Eberhard Ulrich, 90419 Nürnberg (DE); Laska, Bernd, 91074 Herzogenaurach (DE); Nagel, Andreas, 90431 Nürnberg (DE); Schönewolf, Stefan Hans Werner, 90489 Nürnberg (DE); Weigel, Jan, 91077 Großenbuch (DE)

(57) **Zusammenfassung**

Die Erfindung betrifft ein Schienenfahrzeug (1) mit einem Antriebssystem (2), wobei das Antriebssystem (2) einen DC-Bus (3), mindestens einen verbraucherseitigen Stromrichter (4) und einen Eingangssteller (5) aufweist, wobei der Eingangssteller (5) und der mindestens eine verbraucherseitige Stromrichter (4) mittels des DC-Busses (3) miteinander elektrisch verbunden sind, wobei der DC-Bus (3) mindestens zwei Kabel (31) mit einer Lange von mindestens 5 Metern aufweist. Ferner betrifft die Erfindung ein Verfahren zum Betreiben eines derartigen Schienenfahrzeugs (1), wobei elektrische Energie vom Eingangssteller (5) über den DC-Bus (3) zu den verbraucherseitigen Stromrichtern (4) ubertragen wird.

## Beschreibung

Die Erfindung betrifft ein Schienenfahrzeug mit einem Antriebssystem, wobei das Antriebssystem mindestens einen verbraucherseitigen Stromrichter aufweist. Ferner betrifft die Erfindung ein Verfahren zum Betreiben eines derartigen Schienenfahrzeugs.

Antriebsysteme in Schienenfahrzeugen für die Versorgung von elektrischen Komponenten, insbesondere verbraucherseitige Stromrichter, mit elektrischer Energie weisen bei Betrieb an einem DC-Netz typischerweise eine Struktur auf, bei der die verbraucherseitigen Stromrichter direkt mit der Fahrdrahtspannung verbunden sind. Dabei wird die aus dem Netz aufgenommene Energie zum einen über einen oder mehrere Stromrichter an die angeschlossenen Antriebsmotoren abgegeben. Über weitere parallel zu den zuvor genannten Stromrichtern angeschlossene weitere Stromrichter wird das elektrische Bordnetz versorgt. Die Stromrichter zur Versorgung des Bordnetzes weisen typischerweise zusätzlich noch eine Potentialtrennung auf. Die Netzspannung ist dabei teilweise großen Schwankungen unterworfen, die bei der Dimensionierung der verbraucherseitigen Stromrichter berücksichtigt werden müssen.

Der Erfindung liegt die Aufgabe zugrunde, das Antriebssystem eines Schienenfahrzeugs zu verbessern.

Diese Aufgabe wird durch ein Schienenfahrzeug mit einem Antriebssystem gelöst, wobei das Antriebssystem einen DC-Bus, mindestens einen verbraucherseitigen Stromrichter und einen Eingangssteller aufweist, wobei der Eingangssteller und der mindestens eine verbraucherseitige Stromrichter mittels des DC-Busses miteinander elektrisch verbunden sind, wobei der DC-Bus mindestens zwei Kabel mit einer Länge von mindestens 5 Metern aufweist. Ferner wird die Aufgabe durch ein Verfahren zum Betreiben eines derartigen Schienenfahrzeugs gelöst, wobei elektrische Energie vom Eingangssteller über den DC-Bus zu den verbraucherseitigen Stromrichtern übertragen wird.

Weitere vorteilhafte Ausgestaltungen der Erfindung sind in den abhängigen Ansprüchen angegeben.

Der Erfindung liegt die Erkenntnis zugrunde, dass sich das Antriebssystem eines Schienenfahrzeugs dadurch verbessern lässt, dass seine Komponenten dezentral angeordnet und über einen DC Bus miteinander verbunden sind. Das Schienenfahrzeug ist dabei für den Betrieb unter einer DC Fahrdrahtspannung ausgebildet. Dabei ist der DC-Bus als Kabelverbindung ausgestaltet. Aufgrund der induktiven Eigenschaften des Kabels werden die einzelnen Komponenten des Antriebssystems derart voneinander entkoppelt, dass ein Schwingen elektrischer Größen wie Strom und/oder Spannung zwischen den einzelnen Komponenten nicht auftritt bzw. hinreichend stark unterdrückt wird. Es hat sich gezeigt, dass die entkoppelnde Wirkung des Kabels bereits ab einer Kabellänge von etwa 5 Metern auftritt.

Die verbraucherseitigen Stromrichter können dezentral, also besonders vorteilhaft für die Fahrzeugarchitektur angeordnet werden.

Beim dezentralen Antriebssystem wird dabei über einen Eingangssteller der DC Bus mit elektrischer Energie aus dem Fahrdraht versorgt. In einer vorteilhaften Ausgestaltung wird der Eingangssteller durch einen DC/DC Steller gebildet. Besonders vorteilhaft ist es, diesen hochfrequent, d.h. mit einer Schaltfrequenz von mehr als 1 kHz zu betreiben. Dadurch wird das Entstehen von Netzstörströmen auf einfache Weise auf ein akzeptables Maß reduziert. Der Eingangssteller kann die Spannung des DC-Busses steuern oder regeln, so dass die verbraucherseitigen Stromrichter auf diese Spannung ausgelegt werden können. Damit können Reserven in der Auslegung vermieden werden und die verbraucherseitigen Stromrichter günstiger und/oder leistungsfähiger konstruiert werden. Das Problem an ungeregelter und in der Höhe je nach Netz verschieden hoher Netzspannung zu arbeiten, wird zentral vom Eingangssteller, insbesondere von dem DC/DC-Steller, gelöst. Mit anderen Worten ermöglicht die Ausführung des DC-Busses mit einer geregelten oder gesteuerten Spannung eine auf diese Spannung optimierte Auslegung der verbraucherseitigen Stromrichter. Alle an den DC Bus angeschlossenen verbraucherseitigen Stromrichter arbeiten an einer geregelten Spannung, die unabhängig von der Netzspannung vorteilhaft gewählt werden kann.

An diesen DC-Bus sind dann alle für die Speisung von Motoren und Bordnetzen notwendigen verbraucherseitigen Stromrichter angeschlossen. Zu den verbraucherseitigen Stromrichtern zählen insbesondere der Pulswechselrichter zur Speisung der Antriebsmotoren sowie ein Hilfsbetriebeumrichter, insbesondere mit einer 3phasigen Ausgangsspannung von 400V AC und/oder einer Ausgangsspannung von 110 V DC.

Durch die Entkopplung über die Kabel des DC-Busses ist es möglich, die Komponenten des Antriebs auch entfernt voneinander im Schienenfahrzeug anzuordnen. Dies schafft Freiheitsgerade in der Konstruktion des Schienenfahrzeugs ohne dafür Nachteile in Kauf nehmen zu müssen.

Durch die gesteuerte oder geregelte Spannung des DC-Busses ist die Verwendung von Halbleitern auf der Basis von Siliziumcarbid (SiC) oder Galliumnitrit (GaN) im verbraucherseitigen Stromrichter besonders vorteilhaft. Diese weisen im Gegensatz zu Halbleitern auf der Basis von Silizium (Si) ein geringeres Sperrvermögen auf. Die Spannung des DC-Busses kann dabei in vorteilhafterweise unter Berücksichtigung der maximalen Sperrspannung der Halbleiter des verbraucherseitigen Stromrichter gewählt werden. Durch die Verwendung von Halbleitern auf Basis von Siliziumcarbid oder Galliumnitrit für den Pulswechselrichter können Verluste im Motor, die aufgrund von Oberschwingungen entstehen, vermieden werden, wenn der Pulswechselrichter hochfrequent, d.h. mit einer Schaltfrequenz oberhalb von 1kHz, insbesondere oberhalb von 10kHz, betrieben wird.

Bei einer vorteilhaften Ausgestaltung der Erfindung weist das Schienenfahrzeug eine Vielzahl von verbraucherseitigen Stromrichtern auf, die mittels des DC-Busses miteinander elektrisch verbunden sind. Dabei ist für diese Vielzahl von verbraucherseitigen Stromrichtern nur ein Eingangssteller erforderlich. Da die Kosten für die einzelnen verbraucherseitigen Stromrichter sinken bzw. die Leistungsfähigkeit der einzelnen verbraucherseitigen Stromrichter steigt ist diese Anordnung besonders wirtschaftlich, da nur ein Eingangssteller erforderlich ist. Besonders vorteilhaft hat es sich erwiesen, mehr als einen Eingangssteller, insbesondere zwei Eingangssteller, im Antriebssystem vorzusehen, die den DC Bus mit elektrischer Energie versorgen. Dabei können die DC Bus seitigen Ausgänge des Eingangsstellers parallel angeordnet werden. In dieser Anordnung kann, je nach Auslegung, auch bei Ausfall eines Eingangsstellers der DC Bus mit elektrischer Energie derart versorgt werden, dass alle verbraucherseitigen Stromrichter in Betrieb bleiben können.

Bei einer weiteren vorteilhaften Ausgestaltung der Erfindung ist mittels des Eingangsstellers eine Spannung im Bereich von 600V bis 1000V, insbesondere von 800V, zwischen den Kabeln erzeugbar, wobei der verbraucherseitige Stromrichter Halbleiter auf der Basis von Siliziumcarbid oder Galliumnitrit aufweist, wobei die Halbleiter eine Sperrspannung von maximal 1700V aufweisen. Dabei wird in vorteilhafter Weise die Spannung zwischen den Kabeln auf einen Wert im Bereich zwischen 600V und 1000V, insbesondere auf einen Wert von 800V, geregelt. Die Wahl dieser Spannung für den DC Bus ermöglicht die Verwendung von Halbleitern auf der Basis von Siliziumcarbid oder Galliumnitrit mit einer Sperrspannung von 1200V oder 1700V. Diese eignen sich im Besonderen für den Leistungsbereich, den ein Motor eines Schienenfahrzeugs benötigt. Diese Halbleiter, auch als Leistungshalbleiter bezeichnet, bieten einen guten Kompromiss hinsichtlich Durchlassverluste und Schaltverluste, so dass das Antriebssystem, insbesondere die Motoren auf diese Leistungshalbleiter hin optimiert und betrieben werden können. Zudem sind die Anforderungen an die Sicherheit bei Anwendungen bis 1000V geringer als darüber. Gleichzeitig können auch handelsübliche Batterieladegeräte an dieser Spannung betrieben werden, ohne eine weitere Spannungsanpassung vornehmen zu müssen. Besonders vorteilhaft ist, dass die verbraucherseitigen Stromrichter gleich ausgeführt sein können, unabhängig davon, ob sie als Pulswechselrichter oder als Hilfsbetriebeumrichter verwendet werden. Auch ein Batterieladegerät, entweder separat oder als Teil eines Hilfsbetriebeumrichters kann in diesem Spannungsbereich einfach konstruiert und hergestellt werden.

Bei einer weiteren vorteilhaften Ausgestaltung der Erfindung weist das Schienenfahrzeug mindestens zwei Wagen auf, wobei ein erster der mindestens zwei Wagen den Eingangssteller und ein zweiter der mindestens zwei Wagen den mindestens einen verbraucherseitigen Stromrichter oder einen Teil der Vielzahl von verbraucherseitigen Stromrichtern aufweist. Ein solches Antriebssystem ist insbesondere für Triebzüge interessant, bei denen das Antriebssystem sich über mehrere Wagen des Triebzugs erstreckt. Es hat sich dabei als besonders vorteilhaft herausgestellt, dass nicht die Fahrdrahtspannung über die einzelnen Wagen des Schienenfahrzeugs bzw. der Schienenfahrzeugverbands verteilt wird, sondern die geregelte oder gesteuerte Spannung des DC Busses über diesen DC Bus. Der DC Bus erstreckt sich somit über mindestens zwei Wagen des Schienenfahrzeugs. Durch die geregelte Spannung können die Kabel des Schienenfahrzeugs und auch der Kabelübergang am den Wagenübergang einfach ohne Überdimensionierung ausgelegt werden. Gerade die Wagenübergänge werden bei Übertragung der Fahrdrahtspannung schwer und teuer, da diese isolationsmäßig auf die im Vergleich zur DC Bus Spannung teilweise deutlich höhere Fahrdrahtspannung ausgelegt werden müsste. Darauf kann in dieser Ausgestaltung verzichtet werden.

Im Folgenden wird die Erfindung anhand der in den Figuren dargestellten Ausführungsbeispiele näher beschrieben und erläutert. Es zeigen:
- FIG 1, FIG 2: bekannte Antriebssysteme eines Schienenfahr-zeugs,
- FIG 3 bis 5: Antriebssysteme mit DC Bus und
- FIG 6: ein Schienenfahrzeug mit einem DC Bus.

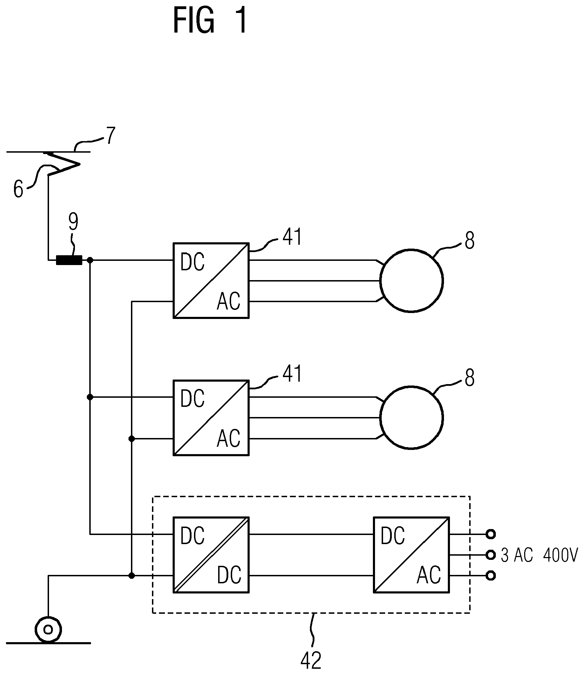

Die FIG 1 zeigt ein aus dem Stand der Technik bekanntes Antriebssystem eines Schienenfahrzeugs 1, das über einen Stromabnehmer 6 aus einer Fahrleitung 7 mit elektrischer Energie versorgt wird. Die Motoren 8 zum Antreiben des Schienenfahrzeugs werden dabei über Pulswechselrichter 41 geregelt. Die Pulswechselrichter 41 bekommen über eine Netzdrossel 9 Energie aus dem Fahrdraht 7. Die Spannung am gleichspannungsseitigen Eingang des Pulswechselrichters 41 ist damit, vernachlässigt man den Spannungsabfall an der Netzdrossel 9, gleich der Spannung am Fahrdraht 7. Parallel zu den Motoren wird das Bordnetz, oftmals ausgestaltet als dreiphasiges Wechselspannungsnetz mit einer Nennspannung von 400V, über einen Hilfsbetriebeumrichter 42 mit Energie versorgt. Auch diese wird über die Netzdrossel 9 dem Fahrdraht 7 entnommen. Zur Potentialtrennung kann im Hilfsbetriebeumrichter ein DC/DC Wandler mit Potentialtrennung vorgesehen werden.

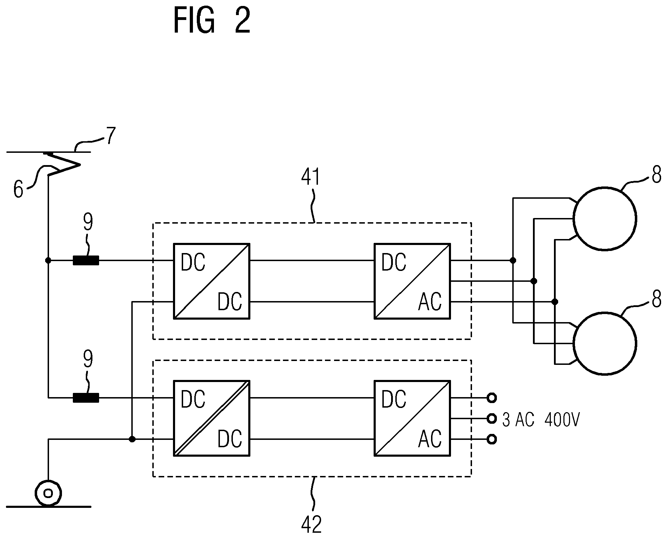

Die FIG 2 zeigt ein weiteres Ausführungsbeispiel eines bekannten Antriebssystems für ein Schienenfahrzeug. Zur Vermeidung von Wiederholungen wird auf die Beschreibung zur FIG 1 sowie auf die dort eingeführten Bezugszeichen verwiesen. Im Unterschied zum vorhergehenden Ausführungsbeispiel werden durch den Pulswechselrichter 41 mehrere Motoren 8, in diesem Falle zwei Motoren 8, gespeist. Um den Stromrichter, der eine Gleichspannung in eine Wechselspannung für die Motoren 8 umwandelt möglichst einfach zu gestalten, weist der Pulswechselrichter 41 zusätzlich noch einen DC/DC Steller auf. Darüber hinaus weist der Zweig mit dem Pulswechselrichter zur Speisung der Motoren 8 und der weitere Zweig mit dem Hilfsbetriebeumrichter zur Versorgung des Bordnetzes jeweils eine eigene Netzdrossel auf. Damit werden diese beiden Zweige stärker voneinander entkoppelt.

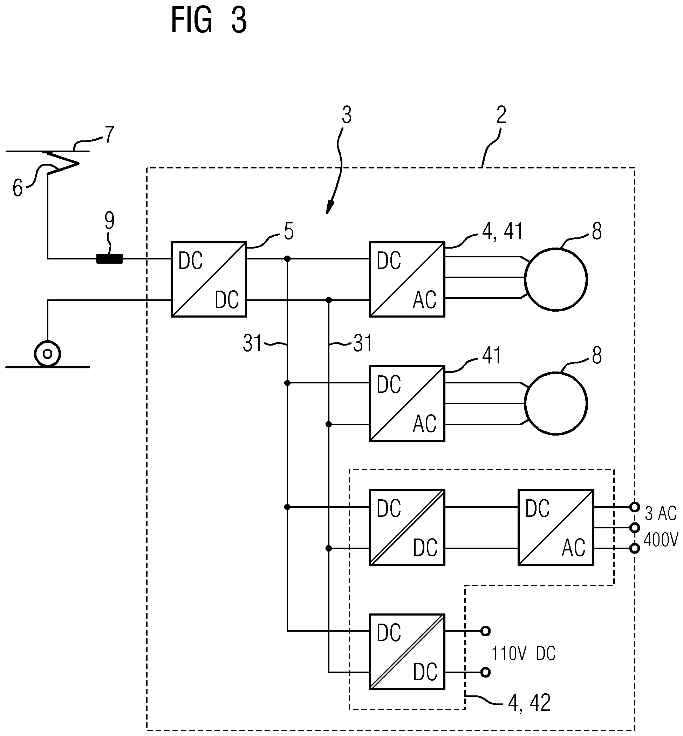

Die FIG 3 zeigt ein Ausführungsbeispiel eines Antriebssystems 2 eines Schienenfahrzeugs 1 mit einem DC Bus 3. Zur Vermeidung von Wiederholungen wird auf die Beschreibung zu den Figuren 1 und 2, sowie auf die dort eingeführten Bezugszeichen verwiesen. Das Antriebssystem 2 weist neben dem DC Bus 3 einen Eingangssteller 5 und verbraucherseitige Stromrichter 4 auf. Bei den verbraucherseitigen Stromrichtern 4 handelt es sich um Pulswechselrichter 41 zur Speisung der Motoren 8 sowie um einen Hilfsbetriebeumrichter 42 zur Erzeugung einer dreiphasigen Wechselspannung bzw. einer Gleichspannung, insbesondere eine Gleichspannung zur Anbindung eines batteriegestützten Gleichspannungsnetzes (110V Netz). Der DC Bus 3 umfasst dabei Kabel 31 um die Komponenten wie den Eingangssteller 5 und die verbraucherseitigen Stromrichter 4 miteinander zu verbinden. Während in bekannten Antriebssystemen der räumliche Abstand zwischen Eingangssteller und Pulswechselrichter immer möglichst gering gewählt wurde, um Schwingungen zu vermeiden, erlaubt die induktivitätsbehaftete Kabelverbindung mit Kabeln 31 auch eine größere Beabstandung der einzelnen Komponenten zu ermöglichen. Bereits ab einer Kabellänge von ca. 5 Metern wirkt die in den Kabeln vorhandene Induktivität sich positiv auf die Stabilität des Antriebssystems aus. Dann kann sich der DC Bus über Teile des Schienenfahrzeugs wie beispielsweise einer Lokomotive oder über einen gesamten Triebzug mit mehreren Wagen erstrecken. In vorteilhafter Weise ist dann der Eingangssteller in der räumlichen Umgebung des Stromabnehmers 6 angeordnet während die Pulswechselrichter 41 sich in der Nähe der Motoren 8 befinden.

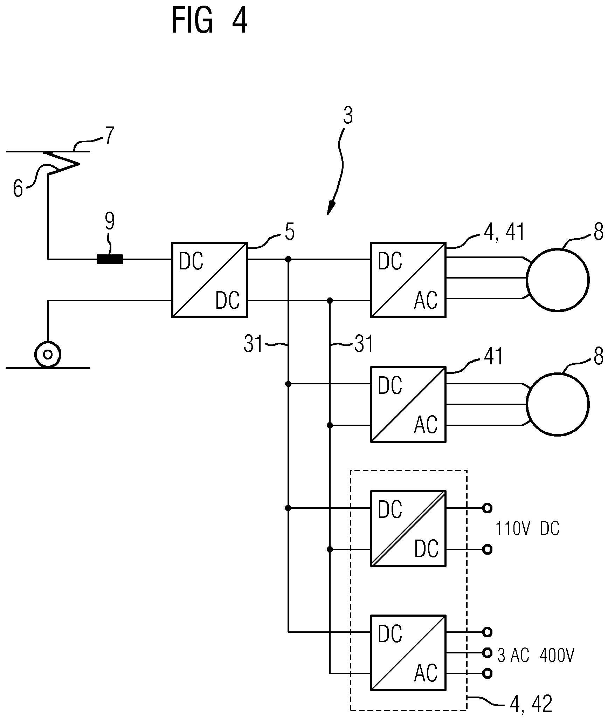

Die FIG 4 zeigt ein weiteres Ausführungsbeispiel eines Antriebssystems 2 eines Schienenfahrzeugs 1 mit einem DC Bus 3. Zur Vermeidung von Wiederholungen wird auf die Beschreibung zu den Figuren 1 bis 3, sowie auf die dort eingeführten Bezugszeichen verwiesen. Im Unterschied zum vorhergehenden Ausführungsbeispiel wird auf die Potentialtrennung bei der Erzeugung der dreiphasigen Wechselspannung verzichtet. Dadurch kann das Antriebssystem nochmals einfacher und kostengünstiger ausgeführt werden.

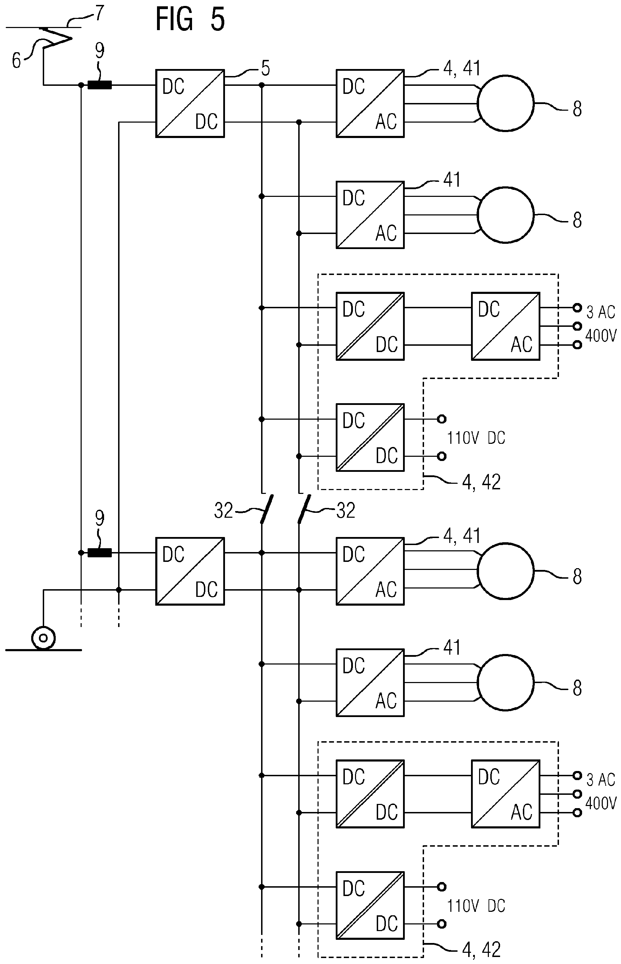

Die FIG 5 zeigt ein weiteres Ausführungsbeispiel eines Antriebssystems 2 eines Schienenfahrzeugs 1 mit einem DC Bus 3. Zur Vermeidung von Wiederholungen wird auf die Beschreibung zu den Figuren 1 bis 4, sowie auf die dort eingeführten Bezugszeichen verwiesen. Im Unterschied zu den vorhergehenden Ausführungsbeispielen weist das Antriebssystem 2 mehrere Eingangssteller 5, insbesondere zwei Eingangssteller 5 auf. Damit kann ein redundantes Antriebssystem 2 realisiert werden, bei dem der Antrieb des Schienenfahrzeugs 1 auch dann funktionsfähig bleibt, wenn einer Eingangssteller 5 ausfällt oder ein Teil der Eingangssteller 5 ausfallen. Somit bleibt bei Ausfall einzelner Stromrichter das Gesamtsystem arbeitsfähig.

Dabei können die mit den jeweiligen Eingangsstellern 5 verbundenen DC Busse entweder getrennt voneinander ausgeführt sein oder miteinander zu einem DC Bus verbunden sein. Ebenso ist es möglich, wie dargestellt, die beiden DC-Busse mittels Schalter 32 trennbar miteinander zu verbinden, so dass im Fehlerfall die betroffenen Komponenten auf einfache Weise getrennt werden können und einen weiteren Betrieb des Schienenfahrzeugs 1, gegebenenfalls unter verminderter Leistungsfähigkeit, ermöglichen.

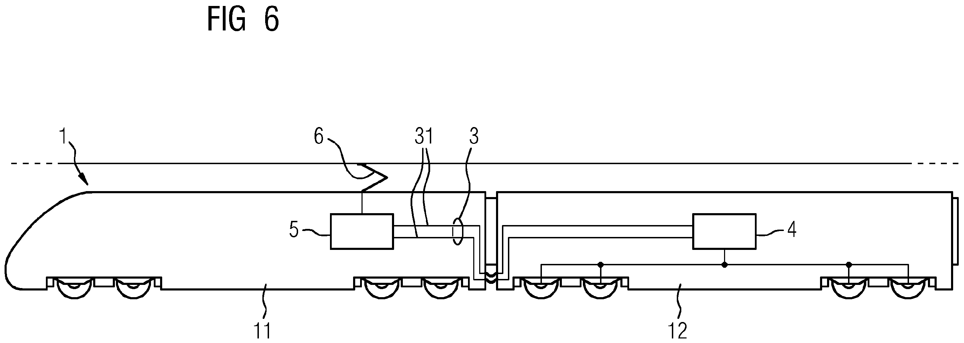

Die FIG 6 zeigt ein Schienenfahrzeug 1 mit zwei dargestellten Wagen 11,12. Dabei ist der Eingangssteller 5 in einem ersten dieser Wagen 11 angeordnet, in dem sich auch der Stromabnehmer befindet. Über Kabel 31 wird der Eingangssteller mit einem verbraucherseitigen Stromrichter 4 in einem zweiten Wagen 12 verbunden. Dieser verbraucherseitige Stromrichter 4 speist dann einen oder, wie hier dargestellt, mehrere Motoren des Schienenfahrzeugs 1. Zusätzlich können sowohl im ersten Wagen 11 wie auch im zweiten Wagen 12 weitere verbraucherseitige Stromrichter angeordnet werden, um die Antriebsleistung gleichmäßig auf das gesamte Schienenfahrzeug 1 zu verteilen, bzw. die einzelnen Bordnetze in den einzelnen Wagen unabhängig voneinander zu versorgen.

Zusammenfassend betrifft die Erfindung ein Schienenfahrzeug mit einem Antriebssystem, wobei das Antriebssystem einen DC-Bus, mindestens einen verbraucherseitigen Stromrichter und einen Eingangssteller aufweist, wobei der Eingangssteller und der mindestens eine verbraucherseitige Stromrichter mittels des DC-Busses miteinander elektrisch verbunden sind, wobei der DC-Bus mindestens zwei Kabel mit einer Länge von mindestens 5 Metern aufweist. Ferner betrifft die Erfindung ein Verfahren zum Betreiben eines derartigen Schienenfahrzeugs, wobei elektrische Energie vom Eingangssteller über den DC-Bus zu den verbraucherseitigen Stromrichtern übertragen wird.

## Patentansprüche

1. Schienenfahrzeug (1) mit einem Antriebssystem (2), wobei das Antriebssystem (2) einen DC-Bus (3), mindestens einen verbraucherseitigen Stromrichter (4) und einen Eingangssteller (5) aufweist, wobei der Eingangssteller (5) und der mindestens eine verbraucherseitige Stromrichter (4) mittels des DC-Busses (3) miteinander elektrisch verbunden sind, wobei der DC-Bus (3) mindestens zwei Kabel (31) mit einer Länge von mindestens 5 Metern aufweist.

2. Schienenfahrzeug (1) nach Anspruch 1, wobei das Schienenfahrzeug (1) eine Vielzahl von verbraucherseitigen Stromrichtern (4) aufweist, die mittels des DC-Busses (3) miteinander elektrisch verbunden sind.

3. Schienenfahrzeug (1) nach einem der Ansprüche 1 oder 2, wobei mittels des Eingangsstellers (5) eine Spannung im Bereich von 600V bis 1000V, insbesondere von 800V, zwischen den Kabeln (31) erzeugbar ist, wobei der verbraucherseitige Stromrichter Halbleiter auf der Basis von Siliziumcarbid aufweist, wobei die Halbleiter eine Sperrspannung von maximal 1700V aufweisen.

4. Schienenfahrzeug (1) nach einem der Ansprüche 1 bis 3, wobei das Schienenfahrzeug (1) mindestens zwei Wagen (11,12) aufweist, wobei ein erster der mindestens zwei Wagen (11) den Eingangssteller (5) und ein zweiter der mindestens zwei Wagen (12) den mindestens einen verbraucherseitigen Stromrichter (4) oder einen Teil der Vielzahl von verbraucherseitigen Stromrichtern (4) aufweist.

5. Verfahren zum Betreiben eines Schienenfahrzeugs (1) nach einem der Ansprüche 1 bis 4, wobei elektrische Energie vom Eingangssteller (5) über den DC-Bus (3) zu den verbraucherseitigen Stromrichtern (4) übertragen wird.

6. Verfahren nach Anspruch 5, wobei die Spannung zwischen den Kabeln (31) auf einen Wert im Bereich zwischen 600V und 1000V, insbesondere auf einen Wert von 800V, geregelt wird.
